# FASCICULE DE BREVET EUROPEEN

(11) **EP 2 352 669 B1**
(45) Date de publication et mention de la délivrance du brevet: **13.03.2013**
(21) Numéro de dépôt: 09760930.9
(22) Date de dépôt: 10.11.2009
(51) Int. Cl.: B64C 25/14, B64C 25/20

(54) **DISPOSITIF DE RACCOURCISSEMENT D'UN ATTERRISSEUR D'AERONEF**
VORRICHTUNG ZUM EINZIEHEN EINES LUFTFAHRZEUG-FAHRWERKS
DEVICE FOR RETRACTING AIRCRAFT LANDING GEAR

(30) Priorité: 05.12.2008 FR 0806854
(43) Date de publication de la demande: 10.08.2011
(73) Titulaire: Messier-Bugatti-Dowty, 78140 Velizy Villacoublay (FR)
(72) Inventeur: DUBUISSON, Marc, F-92410 Ville d'Avray (FR); BRUNE, Marc, F-78140 Velizy-Villacoublay (FR)
(74) Mandataire: Parzy, Benjamin Alain
(86) Numéro de dépôt international: PCT/FR2009/001297
(87) Numéro de publication internationale: WO 2010/063893

(56) Documents cités:
- EP-A- 0 560 649
- GB-A- 1 216 732
- GB-A- 2 234 948
- US-A- 2 621 004

## Description

L'invention concerne un dispositif de raccourcissement d'un atterrisseur d'aéronef.

### ARRIERE-PLAN DE L'INVENTION

Lorsqu'un atterrisseur est en position déployée, préalablement à son relevage, celui-ci présente une longueur maximale du fait de la détente complète de l'amortisseur équipant l'atterrisseur. Or cette longueur peut être plus importante que la longueur disponible en soute. Il convient dès lors d'équiper l'atterrisseur d'un dispositif de raccourcissement permettant son insertion dans la soute en fin de relevage.

Divers dispositifs sont connus. Par exemple, l'atterrisseur principal de l'AIRBUS A340 est doté d'un amortisseur déplaçable dans le caisson de l'atterrisseur entre une position sortie lorsque l'atterrisseur est déployé, et une position rentrée lorsque l'atterrisseur arrive en fin de relevage, ce qui a pour effet de raccourcir la longueur totale de l'atterrisseur, sans comprimer l'amortisseur.

C'est un dispositif complexe et lourd, puisqu'il suppose de prévoir un amortisseur coulissant dans le caisson. En outre, l'embiellage qui commande le déplacement de l'amortisseur subit tous les efforts d'atterrissage, ce qui impose un dimensionnement en conséquence.

Dans d'autres dispositifs de raccourcissement, on comprime l'amortisseur pour diminuer la longueur totale de l'atterrisseur. Par exemple, on connaît des atterrisseurs comportant une bielle télescopique dont l'extrémité basse est solidaire de la tige coulissante de l'amortisseur, et l'extrémité haute est solidaire du caisson, plus précisément d'un point d'attache qui est mobile sur le caisson entre une position d'atterrissage et une position de relevage. Lorsque l'atterrisseur est déployé, l'attache est en position d'atterrissage dans laquelle la bielle télescopique est complètement détendue de sorte que l'amortisseur soit lui-même complètement détendu. A l'atterrissage, la bielle télescopique est comprimée de concert avec la compression de l'amortisseur. Lors du relevage de l'atterrisseur, l'attache de la bielle télescopique est progressivement ramenée en position de relevage, exerçant ainsi un effort de traction sur la bielle télescopique qui tend à comprimer l'amortisseur et ainsi raccourcir l'atterrisseur. Le déplacement de l'attache de la bielle télescopique de la position d'atterrissage à la position de relevage est obtenu de diverses façons. On peut exploiter le mouvement du bras de la contrefiche lors du relevage de l'atterrisseur, ou on peut monter l'attache de la bielle télescopique sur un levier articulé sur le caisson, levier qui est lui-même lié à un point fixe de la structure de l'aéronef à l'aide d'une biellette de sorte que le relevage de l'atterrisseur provoque une rotation du levier, qui provoque donc le déplacement de l'attache de la bielle télescopique de la position d'atterrissage à la position de relevage.

Le document US2621004, qui est considéré l'état de la technique le plus proche, montre un tel dispositif de raccourcissement.

Dans d'autres dispositifs de raccourcissement, la bielle télescopique est remplacée par une simple tige coulissante dans un palier qui est monté mobile sur le caisson entre une position d'atterrissage et une position de relevage. Le palier est déplacé en exploitant un mouvement relatif par rapport au caisson lors du relevage de l'atterrisseur.

Ces divers dispositifs ont en commun d'être assez complexes à concevoir car il faut prévoir sur le caisson des points d'articulation spécifiques. La cinématique peut être complexe à définir.

### OBJET DE L'INVENTION

L'invention a pour objet un dispositif de raccourcissement ne nécessitant pas de points d'attache particuliers sur le caisson de l'atterrisseur.

### BREVE DESCRIPTION DE L'INVENTION

En vue de la réalisation de ce but, on propose un atterrisseur d'aéronef, comportant un caisson destiné à être monté articulé sur une structure de l'aéronef, et une partie inférieure mobile portant les roues, l'atterrisseur comportant en outre un dispositif de raccourcissement de l'atterrisseur entre une position déployée et une position relevée, ledit dispositif comportant un premier et un deuxième membres attelés l'un à l'autre, le premier membre étant attelé à la partie inférieure de l'atterrisseur ou à un élément mobile avec cette partie inférieure lors d'un mouvement de cette partie inférieure relativement au caisson, tandis que le deuxième membre est articulé à la structure de l'aéronef de façon qu'au cours du relevage de l'atterrisseur, le deuxième membre vienne en butée avant que l'atterrisseur ne parvienne en position relevée.

Ainsi, lors de la première partie du relevage, avant la venue en butée du deuxième membre, celui-ci pivote en étant entraîné par le premier membre au gré de la rotation de l'atterrisseur vers sa position de stockage. Puis la venue en butée du deuxième membre immobilise ce dernier et l'empêche de tourner au rythme imposé par la rotation de l'atterrisseur. Ce blocage engendre un effort de traction dans le premier membre qui tire sur la partie inférieure de l'atterrisseur, ce qui a pour effet de raccourcir ce dernier.

Le dispositif est bien plus simple que les dispositifs connus car il ne comporte que deux éléments. En outre, il ne nécessite aucun point d'attache sur le caisson. De plus, il ne comporte aucun élément coulissant, plus délicat à entretenir et à mettre en oeuvre que des éléments articulés.

### BREVE DESCRIPTION DES FIGURES

L'invention sera mieux comprise à la lumière de la description qui suit des figures des dessins annexés, parmi lesquelles :
- la figure 1 est une vue de côté d'un atterrisseur équipé d'un dispositif de raccourcissement selon un mode particulier de réalisation de l'invention, l'atterrisseur étant en position déployée ;
- la figure 2 est une vue de côté de l'atterrisseur de la figure 1, alors que l'aéronef est au sol ;
- la figure 3 est une vue de côté du même atterrisseur, illustré en début de relevage de relevage ;
- la figure 4 est une vue de côté du même atterrisseur en cours de relevage, à l'instant où le premier membre vient en butée
- la figure 5 est une vue de côté du même atterrisseur en fin de relevage, alors qu'il est en position stockée.

Sur toutes les figures, la soute de l'atterrisseur a été représentée de façon symbolique.

### DESCRIPTION DETAILLEE DE L'INVENTION

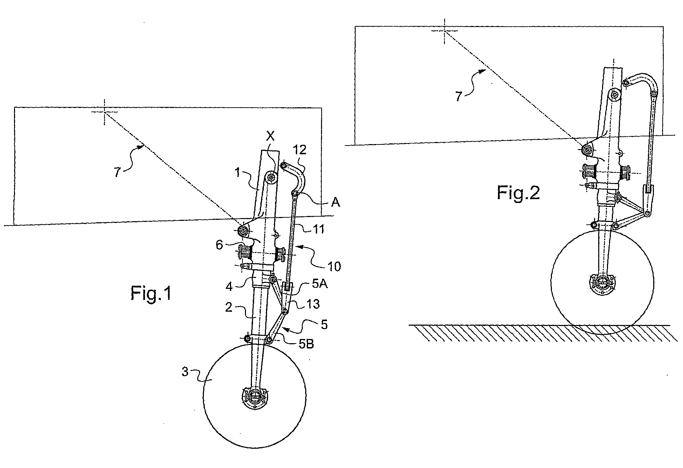

Le dispositif de l'invention est ici appliqué à un atterrisseur auxiliaire d'aéronef. En référence à la figure 1, l'atterrisseur comporte de façon connue en soi un caisson 1 articulé sur la structure de l'aéronef selon un axe X ici perpendiculaire au plan de la figure.

A l'intérieur du caisson coulisse une tige coulissante 2 portant à son extrémité basse un essieu qui reçoit des roues 3. La tige coulissante 2 forme l'un des éléments d'un amortisseur interne. Ici, la tige coulissante 2 est illustrée dans la position détendue qu'elle occupe lorsque l'aéronef est en vol, atterrisseur déployé.

Afin de permettre l'orientation des roues de l'atterrisseur lorsque l'aéronef est au sol, le caisson 1 est équipé d'un tube tournant 4. La tige coulissante 2 coulisse librement dans le tube tournant 4, mais est arrêté en rotation relativement à celui-ci. Pour ce faire, l'atterrisseur est équipé d'un compas 5 avec une branche supérieure 5A et une branche inférieure 5B articulées entre elles au niveau de leurs apex au moyen d'un axe, appelé axe médian. La branche supérieure 5A est articulée sur le tube tournant 4, tandis que la branche inférieure 5B est articulée sur la tige coulissante 2. Dans la position illustrée, tous les axes d'articulation du compas 5 sont parallèles à l'axe X d'articulation du caisson. La rotation du tube tournant 4 est contrôlée et commandée par un actionneur d'orientation 6, ici un actionneur hydraulique à crémaillère. L'atterrisseur est stabilisé dans la position déployée illustrée ici par une contrefiche briseuse 7, dont seul l'axe longitudinal a été représenté ici, pour plus de clarté. Tout ceci est parfaitement connu et n'est rappelé qu'à titre d'information.

Selon l'invention, on équipe l'atterrisseur d'un dispositif de raccourcissement 10 comprenant :
- un premier membre 11 en forme de bielle allongée attelée à l'axe médian du compas 5 au moyen d'un cardan 13. A cet effet, l'axe médian du compas dépasse de celui-ci pour recevoir le cardan 13 ;
- un deuxième membre 12 articulé sur la structure de l'aéronef, en arrière de celui-ci en référence à une direction de relevage et attelé au premier membre 11 au point A au moyen d'une liaison à rotule. Ici, le deuxième membre 12 affecte une forme courbée.

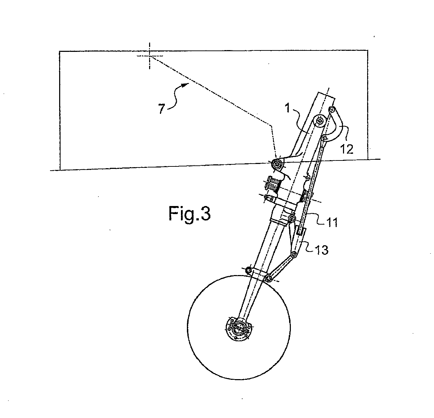

Le fonctionnement du dispositif de l'invention est le suivant. Dans la situation illustrée à la figure 1, la tige coulissante 2 est en butée détendue de sorte que le compas 5 et le caisson 1 forment un ensemble rigide. L'atterrisseur est progressivement relevé par un actionneur de relevage non représenté qui provoque une rotation de l'atterrisseur autour de l'axe d'articulation X. A cet effet, et comme illustré à la figure 3, l'alignement de la contrefiche 7 est préalablement brisé par un actionneur de déverrouillage, également non représenté.

L'ensemble de l'atterrisseur et du dispositif de raccourcissement se comporte alors cinématiquement comme un assemblage de trois éléments articulés entre eux, deux d'entre eux (le caisson 1 et le deuxième membre 12) étant articulés à une structure fixe (la structure d'aéronef), le troisième élément (constitué du premier membre 11 et du cardan 13) étant articulé aux deux autres éléments. L'ensemble se déforme librement (et de façon déterminée) sous l'action de l'actionneur de relevage qui fait pivoter l'atterrisseur, le premier membre 11 pivotant vers l'avant avec l'atterrisseur.

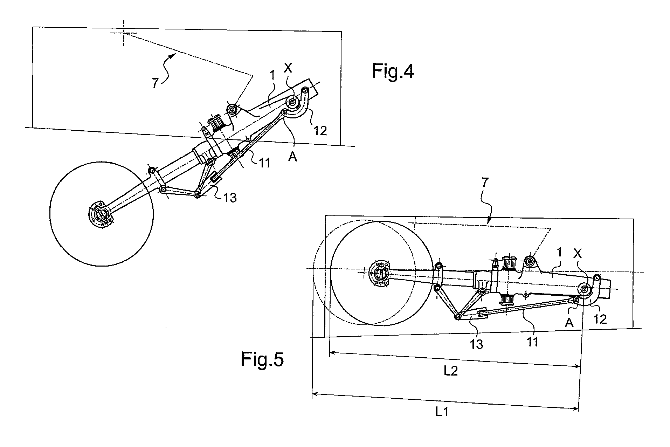

Le relevage de l'atterrisseur se poursuit jusqu'à la situation illustrée à la figure 4 dans laquelle le deuxième membre 12 vient en butée contre le caisson 1. Dès lors, la rotation du deuxième membre 12 est empêchée. Le point d'articulation A du deuxième membre 12 et du premier membre 11 est alors immobilisé. La continuation du relevage contribue donc à générer dans le premier membre 11 un effort de traction qui, exerce sur le compas 5 une sollicitation tendant à faire rentrer la tige coulissante 2 dans le caisson 1, ce qui a pour effet de raccourcir l'atterrisseur.

Le relevage se poursuit jusqu'à la position stockée illustrée à la figure 5, l'atterrisseur se raccourcissant progressivement. Pendant cette dernière partie du relevage, le deuxième membre 12 reste en butée contre le caisson. Dans la position stockée, on constate que la longueur L2 de l'atterrisseur est inférieure à la longueur L1 de l'atterrisseur lorsqu'il est en position déployée (symbolisée ici en traits mixtes).

La portion du caisson contre laquelle le deuxième membre 12 vient en butée constitue un chemin courbe qui fait office de came. Cette came est avantageusement de profil circulaire centré sur l'axe d'articulation X, de sorte que le deuxième membre 12 garde pour la fin du relevage la position qui était la sienne lors de son accostage contre le caisson 1. Cette came peut en variante présenter un profil variable. On peut par exemple vouloir terminer le raccourcissement de l'atterrisseur avant que la roue de l'atterrisseur ne pénètre dans la soute de l'aéronef. Dans ce cas, il convient de prévoir sur le caisson un profil de came circulaire, sauf pour la dernière portion du relevage, qui aura un profil tel que le premier membre 11 ne tire plus sur le compas 5 et arrête donc de provoquer un raccourcissement de l'atterrisseur. Le profil de came autorisera donc, pour cette dernière partie du relevage, une rotation additionnelle du deuxième membre 12.

On notera que dans la situation illustrée à la figure 1, le deuxième membre 12 et l'ensemble formé du premier membre 11 et du cardan 13 forment, avec le caisson 1 et la branche supérieure 5A du compas, un parallélogramme articulé. Lors de l'atterrissage de l'aéronef et de l'enfoncement consécutif de la tige coulissante 2 dans le caisson 1, l'ensemble se déforme librement, sans opposer de résistance à l'enfoncement de la tige coulissante, le deuxième membre 12 pivotant vers l'arrière, comme cela est visible à la figure 2. Ainsi, sans utiliser d'élément coulissant ou télescopique, le dispositif de raccourcissement de l'invention est tout à fait compatible avec les enfoncements de l'atterrisseur consécutifs à l'atterrissage de l'aéronef.

On notera également que le dispositif de raccourcissement est également compatible avec l'orientation des roues de l'atterrisseur. En effet, la liaison rotulaire entre le premier membre 11 et le deuxième membre 12, ainsi que la liaison par cardan 13 entre le premier membre 11 et l'axe médian du compas 5 permet au dispositif de suivre le compas 5 lors de la rotation du tube tournant 4, tout en restant connecté au compas.

Le dispositif de raccourcissement de l'invention est un dispositif entièrement passif, comportant un minimum de pièces, toutes très simples. Il peut être facilement adapté à un atterrisseur existant, en modifiant simplement l'axe médian du compas et en adaptant sur la structure de l'aéronef une ferrure d'articulation du deuxième membre. Le cas échéant, le caisson est équipé en regard du premier membre d'un chemin d'accostage spécifique sur laquelle le deuxième membre vient buter lors du relevage de l'atterrisseur.

L'invention n'est pas limitée à ce qui vient d'être décrit, mais englobe au contraire toute variante entrant dans le cadre défini par les revendications.

En particulier, bien que l'on ait illustré le dispositif de raccourcissement en relation avec un atterrisseur muni d'un dispositif d'orientation des roues, le dispositif peut également être appliqué à un atterrisseur sans dispositif d'orientation des roues comme un atterrisseur principal. Le dispositif s'applique également à un atterrisseur dont les axes d'articulation du compas ne sont pas parallèles à l'axe d'articulation du caisson.

De même, bien que l'on ait illustré le dispositif de raccourcissement en relation avec un atterrisseur direct dans lequel l'amortisseur est à l'intérieur du caisson et les roues sont portées par la tige coulissante, le dispositif pourra être utilisé avec un amortisseur à balancier, dans lequel les roues sont portées par un balancier articulé sur le caisson, l'amortisseur étant quant à lui articulé d'une part sur le balancier et d'autre part sur le caisson de l'atterrisseur ou la structure de l'aéronef. Dans ce cas, le premier membre est de préférence attelé au balancier.

On pourra plus généralement atteler le premier membre à une partie inférieure de l'atterrisseur qui porte les roues (par exemple ici la tige coulissante ou le balancier), ou à tout autre élément mobile avec cette partie inférieure lorsqu'elle se déplace relativement au caisson (par exemple l'une des branches du compas, l'axe médian du compas...). Dans tous les cas, le dispositif de raccourcissement doit être disposé par rapport à l'atterrisseur de sorte que l'effort de traction imposé par le premier membre provoque un mouvement de la partie inférieure relativement au caisson tendant à raccourcir l'atterrisseur. Cependant, il apparaît que l'attelage du premier membre au compas (le plus pratique étant bien sûr l'attelage à l'axe médian du compas) permet de profiter de l'effet de démultiplication naturellement apporté par le compas, et permet donc un raccourcissement plus important.

Par ailleurs, les liaisons entre les membres du dispositif de raccourcissement d'une part, et entre les membres et la structure de l'aéronef et l'atterrisseur d'autre part pourront prendre toute forme connue (liaison pivot, rotule, cardan...) nécessitée par les circonstances ou la cinématique particulière de l'atterrisseur.

En outre, bien que l'on ait indiqué que le raccourcissement de l'atterrisseur commençait lorsque le deuxième membre vient en butée, il est possible de le faire commencer avant, en s'arrangeant pour que les deux membres viennent en alignement avant que le deuxième membre ne vienne en butée.

Enfin, le deuxième membre peut venir en butée contre le caisson, comme illustré, mais encore contre un élément solidaire du caisson, par exemple un chemin d'accostage rapporté sur le caisson, ou encore contre une butée solidaire de la structure de l'aéronef. Auquel cas, une fois que le deuxième membre a accosté cette butée, il reste immobile pour la suite du relevage.

## Revendications

1. Atterrisseur d'aéronef, comportant un caisson (1) destiné à être monté articulé sur une structure de l'aéronef, et une partie inférieure (2) portant les roues et mobile relativement au caisson, l'atterrisseur comportant en outre un dispositif de raccourcissement de l'atterrisseur entre une position déployée et une position relevée, **caractérisé en ce que** ledit dispositif comporte un premier et un deuxième membres (11,12) attelés l'un à l'autre, le premier membre (11) étant attelé à la partie inférieure (2) de l'atterrisseur ou à un élément mobile (5) avec cette partie inférieure lors d'un mouvement de cette partie inférieure relativement au caisson, tandis que le deuxième membre (12) est articulé à la structure de l'aéronef de façon qu'au cours du relevage de l'atterrisseur, le deuxième membre vienne en butée avant que l'atterrisseur ne parvienne en position relevée.

2. Atterrisseur selon la revendication 1, dans lequel la partie inférieure comprend une tige montée coulissante dans le caisson, un compas s'étendant entre le caisson et la tige coulissante, le premier membre (11) étant attelé au compas.

3. Atterrisseur selon la revendication 2, dans lequel le premier membre (11) est attelé à un axe médian du compas.

4. Atterrisseur selon la revendication 3, dans lequel le premier membre (11) est attelé à l'axe médian du compas par un cardan (13).

5. Atterrisseur selon la revendication 1, dans lequel le deuxième membre (12) vient en butée contre le caisson (1) ou un élément solidaire de ce dernier.

## Claims

1. An aircraft undercarriage comprising a strut (1) designed to be mounted in hinged manner to a structure of the aircraft, and a bottom portion (2) carrying the wheels and movable relative to the strut, the undercarriage also including an undercarriage shortener device for shortening the undercarriage between a deployed position and a raised position, the undercarriage being **characterized in that** said shortener device comprises first and second members (11, 12) coupled to each other, the first member (11) being coupled to the bottom portion (2) of the undercarriage or to an element (5) that moves together with said bottom portion during movement of said bottom portion relative to the strut, while the second member (12) is hinged to the structure of the aircraft in such a manner that while the undercarriage is being raised, the second member comes into abutment before the undercarriage reaches the raised position.

2. An undercarriage according to claim 1, wherein the bottom portion comprises a slide rod mounted to slide in the strut, a scissors linkage extending between the strut and the slide rod, the first member (11) being coupled to the scissors linkage.

3. An undercarriage according to claim 2, wherein the first member (11) is coupled to a middle pin of the scissors linkage.

4. An undercarriage according to claim 3, wherein the first member (11) is coupled to the middle pin of the scissors linkage by a universal joint (13).

5. An undercarriage according to claim 1, wherein the second member (12) comes into abutment against the strut (1) or an element secured thereto.

## Patentansprüche

1. Luftfahrzeug-Fahrgestell, umfassend ein Gehäuse (1), das dazu bestimmt ist, an einem Luftfahrzeug-Aufbau beweglich angeordnet zu werden, und einen unteren Abschnitt (2), der die Räder trägt und relativ zum Gehäuse beweglich ist, wobei das Fahrgestell des Weiteren eine Vorrichtung zum Einziehen des Fahrgestells zwischen einer ausgefahrenen und eingefahrenen Position umfasst, **dadurch gekennzeichnet, dass** die Vorrichtung ein erstes und zweites Glied (11, 12) umfasst, die aneinander gekoppelt sind, wobei das erste Glied (11) mit dem unteren Abschnitt oder einem Element (5) gekoppelt ist, das sich während einer Bewegung dieses unteren Abschnitts relativ zum Gehäuse zusammen mit dem unteren Abschnitt (2) bewegt, während das zweite Glied (12) derart beweglich mit dem Luftfahrzeug-Aufbau verbunden ist, dass im Laufe des Einfahrens des Fahrgestells das zweite Glied zum Anschlag gebracht wird, bevor das Fahrgestell in die eingefahrene Position gelangt.

2. Fahrgestell nach Anspruch 1, bei dem der untere Abschnitt eine Stange umfasst, die verschiebbar im Gehäuse angordnet ist, und bei dem sich ein Kompass zwischen dem Gehäuse und der verschiebbaren Stange befindet, wobei das erste Glied (11) an den Kompass gekoppelt ist.

3. Fahrgestell nach Anspruch 2, bei dem das erste Glied (11) an eine Mittelachse des Kompasses gekoppelt ist.

4. Fahrgestell nach Anspruch 3, bei dem das erste Glied (11) über ein Kardangelenk (13) an die Mittelachse des Kompasses gekoppelt ist.

5. Fahrgestell nach Anspruch 1, bei dem das zweite Glied (12) an dem Gehäuse (1) oder an ein fest mit diesem verbundenes Element anschlägt.
